# EUROPÄISCHE PATENTSCHRIFT

(11) **EP 3 963 897 B1**
(45) Veröffentlichungstag und Bekanntmachung des Hinweises auf die Patenterteilung: **06.05.2026**
(21) Anmeldenummer: 20718277.5
(22) Anmeldetag: 07.04.2020
(51) Int. Cl.: H04Q 9/00, G01D 4/00

(54) **ZÄHLERADAPTER**
METER ADAPTER
ADAPTATEUR DE COMPTEUR

(30) Priorität: 02.05.2019 DE 102019111324
(43) Veröffentlichungstag der Anmeldung: 09.03.2022
(73) Patentinhaber: Westnetz GmbH, 44139 Dortmund (DE)
(72) Erfinder: OVERHOFF, Klaus, 45721 Haltern (DE)
(74) Vertreter: Cohausz & Florack
(86) Internationale Anmeldenummer: PCT/EP2020/059841
(87) Internationale Veröffentlichungsnummer: WO 2020/221558

(56) Entgegenhaltungen:
- EP-A1- 2 707 732
- WO-A1-2013/136295
- WO-A1-2016/066219
- US-A1- 2013 285 834
- US-A1- 2016 295 306

## Beschreibung

Die Anmeldung betrifft einen Zähleradapter für einen Zähler mit einem Impulsausgang. Darüber hinaus betrifft die Anmeldung ein System, ein Verfahren und ein Computerprogramm.

Aus dem Stand der Technik sind Zähler zum Erfassen einer Versorgungsmediummenge, die über einen bestimmten Versorgungsmediumkanal übertragen wurde, bekannt, um beispielsweise eine verbrauchte Mediummenge zu bestimmen. Beispielsweise sind Stromzähler bzw. Elektrizitätszähler bekannt zum Erfassen der Strom- bzw. Energiemenge, die über eine überwachte Stromleitung ausgetauscht wird.

So kann ein Gebäude oder ein Teil eines Gebäudes (z.B. eine bestimmte Wohnung) einen Stromzähler umfassen, um die von den elektrischen Verbrauchern des Gebäudes bzw. des Teils des Gebäudes verbrauchte Stromenge (bzw. verbrauchte elektrische Energiemenge) zu erfassen, also insbesondere die von einem Stromverteilnetz erhaltene Strommenge. Es versteht sich, dass für den Fall, dass ein Erzeuger (z.B. Photovoltaikanlage und dergleichen) vorgesehen ist, durch den mindestens einen Stromzähler auch die in ein Stromverteilnetz eingespeiste Strommenge erfasst werden kann.

Moderne Stromzähler können in der Regel an ein so genanntes Smart-Meter-Gateway (SMGW) angeschlossen sein. Smart-Meter-Gateways dienen insbesondere der sicheren Übertragung der von dem Stromzähler gemessenen Strommenge beispielsweise an den Stromversorger (z.B. ein Backendsystem in Form von mindestens einem Server), beispielsweise zu Abrechnungszwecken und/oder zur Kundeninformation (z.B. können die Zählerdaten einem Kunden über ein Nutzerendgerät via dem Backendsystem bereitgestellt werden).

Aufgrund der hohen Anforderungen an Datenschutz und Datensicherheit im Bereich intelligenter Messsysteme werden zukünftig in Deutschland nur solche intelligenten Messsysteme zugelassen, die den Anforderungen des Bundesamts für Sicherheit in der Informationstechnik (BSI) an ein Smart Meter Gateway genügen. In anderen Ländern sind in der Regel ähnliche Vorgaben vorgesehen, so dass die nachfolgenden Ausführungen entsprechend übertragbar sind.

Entsprechendes gilt für andere Zähler, wie Gaszähler, Wärmemengenzähler, Wasserzähler etc. Für eine flächendeckende Einführung von intelligenten Zählern ist es aus dem Stand der Technik daher bekannt, die derzeit installierten Zähler durch moderne elektronische, insbesondere digitale Zähler (so genannten Smart Meter) zu ersetzen. Nachteilig hieran ist jedoch, dass eigentlich funktionsfähige Zähler (z.B. ein Balgengaszähler) ersetzt werden müssen. Dies ist mit entsprechend hohen Kosten verbunden. Insbesondere sind elektronische Zähler, beispielsweise elektronische Gaszähler, sowohl in der Beschaffung als auch im Betrieb kostspieliger. Zudem ist die Lebensdauer/Standzeit dieser Zähler im Vergleich zu konventionellen Zählern, wie Balgenzähler (BGZ) deutlich reduziert.

EP 2 707 732 A1 offenbart einen Zähleradapter für einen Zähler. Ein Impulseingang des Zähleradapters ist eingerichtet zum Anschließen des Zähleradapters an den Impulsausgang des Zählers. Ferner weist der Zähleradapter einen Datensatzausgang auf, eingerichtet zum Senden des Zählerdatensatzes an ein weiteres Gerät, beispielsweise über PAN, HAN oder LAN. Darüber hinaus umfasst der Zähleradapter einen Prozessor und einen Datenspeicher zum Speichern von Computerprogrammcode. Hierbei kann angenommen werden, dass ein Konvertieren der Impulszählerdaten in einen Zählerdatensatz entsprechend dem verwendeten Standard erfolgt.

Daher liegt der Anmeldung die Aufgabe zugrunde, eine Möglichkeit zu schaffen, welches es ermöglicht, bereits installierte und noch funktionsfähige Zähler weiterzuverwenden und insbesondere die Kosten zu verringern.

Die Aufgabe wird gemäß einem ersten Aspekt der Anmeldung gelöst durch einen Zähleradapter für einen Zähler mit einem Impulsausgang nach Anspruch 1. Der Zähleradapter umfasst mindestens einen Impulseingang, eingerichtet zum Anschließen des Zähleradapters an den Impulsausgang des Zählers. Der Zähleradapter umfasst mindestens eine Übersetzungseinrichtung, eingerichtet zum Konvertieren der über den Impulseingang von dem Zähler erhaltenen Impulszählerdaten in einen Zählerdatensatz in einem Datenformat gemäß einem Standardprotoll eines Smart Meter Gateways. Der Zähleradapter umfasst mindestens einen Datensatzausgang, eingerichtet zum Senden des konvertierten Zählerdatensatzes an ein entfernt von dem Zähleradapter angeordnetes Smart Meter Gateway.

Indem im Gegensatz zum Stand der Technik ein Zähleradapter zum Anschließen an einen Zähler (z.B. BGZ) über den Impulsausgang des Zählers vorgesehen ist, wobei der Zähleradapter erhaltene Impulszählerdaten (z.B. 0/1-Impulse) in Zählerdaten umwandelt (insbesondere eine entsprechende Sprache), die von einem Smart Meter Gateway verarbeitet werden können, wird in einfacher Weise eine Möglichkeit geschaffen, bereits installierte und noch funktionsfähige Zähler weiterzuverwenden. Insbesondere kann eine Gateway-Anbindung über den Zähleradapter erfolgen. Ein Austausch eines Zählers kann vermieden werden. Die Kosten zur Anbindung an ein Smart Meter Gateway werden reduziert. Zudem können die Kosten für den Betrieb von Zählern reduziert werden.

Der Zähler ist ein herkömmlicher Zähler (z.B. ein BGZ) mit mindestens einem Impulsausgang. Unter einem Impulsausgang ist insbesondere eine Hardware-Schnittstelle zu verstehen. Der Impulsausgang ist zum Ausgeben von Impulsen eingerichtet. Anders ausgedrückt wird ein Zählerstand durch die Ausgabe von Impulsen ausgegeben (und kann insbesondere in dem Zähleradapter fortgeschrieben bzw. konvertiert werden). Zähler mit Impulsausgang werden insbesondere verwendet, um Impulse, die einem bestimmten Wert entsprechen, zu einem Empfänger zu übertragen. Die Kennzeichnung des Impulswertes kann insbesondere von dem Zählertyp abhängen. Beispielsweise kann die Impulswertigkeit wie folgt angegeben sein: x (Energieeinheiten)/Impuls oder die Impulsausgangsfrequenz: x Impulse/(Energieeinheiten).

Der anmeldungsgemäße Zähleradapter weist mindestens einen Impulseingang auf, der insbesondere zu dem Impulsausgang des anzuschließenden bzw. zu verbindenden Zählers korrespondiert. Anders ausgedrückt ist der Impulseingang derart ausgebildet, dass er unmittelbar oder mittelbar (z.B. über ein Verbindungskabel) mit dem Impulsausgang des Zählers mechanisch und elektrisch verbunden werden kann.

Unter einem Impulseingang ist insbesondere eine Hardware-Schnittstelle zu verstehen. Der Impulseingang ist zum Empfangen von (zuvor beschriebenen) Impulsen eingerichtet. Anders ausgedrückt kann insbesondere ein Zählerstand eines Zählers durch den Empfang von Impulsen erhalten (bzw. fortgeschrieben) werden.

Die erhaltenen Impulse bzw. die Impulszählerdaten werden insbesondere einer Übersetzungseinrichtung zur Verfügung gestellt. Die Übersetzungseinrichtung konvertiert, insbesondere mittels geeigneter Mittel, die Impulszählerdaten in Daten, die von einem Smart Meter Gateway lesbar und insbesondere weiter verarbeitbar sind. Insbesondere setzt die Übersetzungseinrichtung die Impulszählerdaten in einen Zählerdatensatz in einem Datenformat gemäß einem Standardprotoll eines Smart Meter Gateways um, insbesondere gemäß einem Standard des OMS (Open Metering System). Anders ausgedrückt übersetzt die Übersetzungseinrichtung die 0/1 Impulse, die beispielsweise ein BGZ abgibt, in eine Sprache, die das Smart Meter Gateway versteht und verarbeiten kann.

Der anmeldungsgemäße Zähleradapter weist ferner mindestens einen Datensatzausgang auf, insbesondere in Form eines Kommunikationsmoduls bzw. einer Schnittstelle. Der Datensatzausgang ist eingerichtet, den von der Übersetzungseinrichtung zur Verfügung stellbaren und konvertierten (bzw. fortgeschriebenen) Zählerdatensatz an ein in Reichweite, aber entfernt von dem Zähleradapter, angeordnetes Smart Meter Gateway zu senden, insbesondere zu übermitteln.

Insbesondere kann durch die Anmeldung ein herstellerneutrales OMS-(Funk-)modul in Form des Zähleradapters zur BSI (Bundesamt für Sicherheit in der Informationstechnik) -konformen Anbindung eines Balgengaszählers (BGZ) mit Impulsausgang (oder dergleichen) an ein Smart Meter Gateway bereitgestellt werden.

Gemäß einer ersten Ausführungsform des anmeldungsgemäßen Zähleradapters kann der mindestens einen Impulseingang ein drahtgebundener Impulseingang sein, eingerichtet zum Herstellen einer drahtgebundenen Verbindung zwischen dem Impulseingang des Zähleradapters und dem Impulsausgang des Zählers. Insbesondere kann ein Verbindungskabel (z.B. zwischen 0,1 m und 10 m, insbesondere zwischen 0,1 m und 3 m) zwischen dem Impulsausgang des Zählers und dem drahtgebundenen Impulseingang des Zähleradapters anschließbar sein. Der Zähleradapter kann mittels der Drahtverbindung mit dem Impulsgeber des Zählers (via dem Impulsausgang) verbunden werden. Der Impulsgeber ist insbesondere vom Typ des Zählers abhängig (kann aber immer über einen Schließkontakt ein 0/1-Signal pro definierter Versorgungsmenge (z.B. Gasmenge) ausgeben). Das 0/1-Signal (Impuls) kann von der Elektronik der Übersetzungseinrichtung verarbeitet und in das notwendige Funksignal, welches von dem Smart Meter Gateway verarbeiten kann, umgewandelt werden.

Eine besonders sichere Kommunikationsverbindung kann zwischen einem Zähler und dem Zähleradapter hergestellt werden. Zudem kann der Zähleradapter im Rahmen der durch das Verbindungskabel vorgegebenen Reichweite beliebig positioniert werden.

Insbesondere kann der Zähleradapter derart positionierbar sein, dass eine Kommunikationsverbindung zwischen dem Datensatzausgang und dem Smart Meter Gateway herstellbar ist. Beispielhaft kann der Zähleradapter in der Nähe eines Gaszahlers, z.B. an der Wand, mittels eines Befestigungsmoduls (z.B. Schelle) an einer Rohrleitung, oder auch direkt am Gaszahler angebracht werden. Durch die Drahtverbindung (Kabel) mit dem Impulsgeber/ Gaszähler kann ein Montageplatz gewählt werden, bei dem eine möglichst gute Funkverbindung mit dem Smart Meter Gateway gewährleistet ist.

Gemäß einer weiteren Ausführungsform des anmeldungsgemäßen Zähleradapters kann der mindestens eine Datensatzausgang ein drahtloser Datensatzausgang sein, eingerichtet zum Senden des konvertierten Zählerdatensatzes über eine drahtlose Verbindung an das entfernt von dem Zähleradapter angeordnete Smart Meter Gateway, insbesondere gemäß der Norm EN 13757-4. In einfacher und gleichzeitig sicherer Weise können Zählerdatensätze an ein Smart Meter Gateway weitergeleitet werden. Ein Smart Meter Gateway kann in herkömmlicher Weise die empfangenen Zählerdatensätze verarbeiten und insbesondere weiterleiten.

Ein "Konvertieren" meint insbesondere ein "Fortschreiben".

Darüber hinaus ist die mindestens eine Übersetzungseinrichtung gemäß der Erfindung eingerichtet zum Bestimmen des augenblicklichen Zählerstands des anschließbaren Zählers aus den erhaltenen Impulszählerdaten, wobei die mindestens eine Übersetzungseinrichtung eingerichtet ist zum Konvertieren des bestimmten Zählerstands, derart, dass der konvertierte Zählerdatensatz den bestimmten Zählerstand enthält. Aus dem Zählerstand kann/können insbesondere eine verbrauchte bzw. empfangene Versorgungsmediummenge und/oder die erzeugte bzw. eingespeisten Versorgungsmediummenge bestimmt werden. Wie bereits beschrieben wurde, können Impulse empfangen werden, aus denen die Übersetzungseinrichtung vorzugsweise den Zählerstand bestimmt. Ein Impuls kann wie folgt definiert sein: 30 ms ≤ t_EIN ≤ 120 ms; 30 ms ≤ t_AUS.

Gemäß der Erfindung umfasst der Zähleradapter mindestens einen Daterispeicher eingerichtet zum Speichern mindestens einer zählertyp-basierten Übersetzungsregel, insbesondere in Form mindestens einer gespeicherten zählertyp-basierten Übersetzungsbeziehung. Die mindestens eine Übersetzungseinrichtung ist eingerichtet zum Konvertieren der über den Impulseingang von dem Zähler erhaltenen Impulszählerdaten in den Zählerdatensatz, basierend auf der mindestens einen Übersetzungsregel, also durch Anwenden bzw. Verarbeiten dieser Regel. Insbesondere kann die Übersetzungsregel von der Impulswertigkeit des angeschlossenen Zählers abhängen. Basierend auf der Impulswertigkeit und der Impulszählerdaten kann der entsprechende Wert, insbesondere der Zählerstand, bestimmt und anschließend in ein Datenformat entsprechend einem Standardprotoll eines Smart Meter Gateways übertragen werden. Insbesondere kann die Übersetzungsregel eine Regel für eine unmittelbare Umsetzung der Impulszählerdaten in Zählerdaten bzw. einen Zählerdatensatz in einem Datenformat entsprechend einem Standardprotoll eines Smart Meter Gateways sein.

Gemäß der Erfindung ist in dem Datenspeicher (vorab) eine Mehrzahl von auswählbaren zählertyp-basierten Übersetzungsregeln für eine entsprechende Mehrzahl von unterschiedlichen Zählertypen gespeichert, insbesondere in Form einer Übersetzungstabelle (oder dergleichen) mit einer Mehrzahl von zählertyp-basierten Übersetzungsbeziehungen. Insbesondere kann eine Vielzahl von unterschiedlichen Übersetzungsregeln für eine entsprechende Mehrzahl von unterschiedlichen Zählertypen, beispielsweise unterschiedliche Gaszählertypen und/oder unterschiedliche Wasserzählertypen und/oder unterschiedliche Wärmezählertypen und/oder unterschiedliche Stromzählertypen, vorab, vorzugsweise werkseitig, gespeichert sein.

Es versteht sich, dass vorab auch nur eine Übersetzungsregel von nur einem Zählertyp implementiert sein kann. Im bestimmungsgemäßen Betrieb ist insbesondere stets eine Übersetzungsregel ausgewählt.

Die von der Übersetzungseinrichtung (tatsächlich) anwendbare zählertyp-basierte Übersetzungsregel ist auswählbar in Abhängigkeit des Zählertyps des anzuschließenden Zählers. Anders ausgedrückt wird bei einem Anschluss eines Zählers der Zählertyp von diesem Zähler bestimmt und dann die Übersetzungsregel ausgewählt, die dieser Übersetzungsregel zugeordnet ist. Auswählen meint insbesondere, dass die entsprechende Regel aktiviert wird und die Übersetzungseinrichtung eine Konvertierung von Daten nur auf der aktivierten Regel durchführt. Anders ausgedrückt kann bei der Installation eine Konfigurierung des Zähleradapters in einfacher Weise durchgeführt werden.

Die mindestens eine Übersetzungseinrichtung ist eingerichtet zum Konvertieren der über den Impulseingang von dem Zähler erhaltenen Impulszählerdaten in den Zählerdatensatz, basierend auf der ausgewählten Übersetzungsregel. Indem eine Vielzahl von Übersetzungsregeln für eine entsprechende Mehrzahl von unterschiedlichen Zählertypen in dem Zähleradapter gespeichert und auswählbar ist, kann ein herstellerunabhängiger und spartenunabhängiger Kommunikationsadapter bereitgestellt werden. Insbesondere ist ein entsprechender anmeldungsgemäßer Zähleradapter nicht nur bei einem bestimmten Zähler einsetzbar, sondern kann für unterschiedliche Gaszähler, Wasserzählertypen, Wärmemengenzählertypen, Stromzählertypen etc. eingesetzt werden.

Erfindungsgemäss ist in dem Datenspeicher jeweils mindestens eine Kennung eines Zählertyps zusammen mit der zugeordneten Übersetzungsregel gespeichert sein. Unter einer Kennung eines Zählertyps ist insbesondere eine Angabe zu verstehen, durch die der Zählertyp eines Zählers (eineindeutig) bestimmbar ist. Beispielsweise kann eine Seriennummer oder eine ähnliche, insbesondere eindeutige alphanumerische Bezeichnung mit einem Nummernanteil, als Kennung eines Zählertyps verwendet werden.

Gemäß der Erfindung umfasst der Zähleradapter mindestens eine Leseeinrichtung, eingerichtet zum Erfassen einer dem anzuschließenden Zähler zugeordnete Kennung (insbesondere eine zuvor beschriebene Kennung eines Zählertyps). Die Leseeinrichtung kann insbesondere ein optischer Scanner sein. Bei anderen Varianten kann auch ein RFID-basierter Leser, NFC-basierter Leser etc. alternativ oder zusätzlich vorgesehen sein.

Die mindestens eine Übersetzungseinrichtung ist eingerichtet zum Auswählen der Übersetzungsregel abhängig von der erfassten Kennung. Insbesondere ist eine eindeutige Zuordnung zwischen Zähler und Kennung vorgesehen, so dass basierend auf der erfassten Kennung auf den Zählertyp des angeschlossenen oder anzuschließenden Zählers geschlossen werden kann. Eine Zuordnung liegt beispielsweise vor, wenn die Kennung, beispielsweise in Form eines lesbaren Codierungsmoduls (z.B. Strichcode, QR-Code, RFID- oder NFC-Tag etc.) in oder an oder zumindest benachbart zu dem Zähler angeordnet ist. Auch kann vorgesehen sein, dass ein entsprechendes Codierungsmodul, insbesondere ein Strichcode oder QR-Code, in einer Betriebsanleitung des Zählers angeordnet ist. In einfacher und insbesondere zuverlässiger Weise kann die Übersetzungsregel ausgewählt werden, die dem anzuschließenden Zähler eindeutig zugeordnet ist.

Gemäß einer weiteren Ausführungsform des anmeldungsgemäßen Zähleradapters kann zumindest die Übersetzungseinrichtung in einem Gehäuse des Zähleradapters integriert sein. Insbesondere kann zumindest die Übersetzungseinrichtung von dem Gehäuse (z.B. aus Kunststoff) vollständig umschlossen sein. Das Gehäuse kann ein BSIkonformes Gehäuse sein. Vorzugsweise kann zudem zumindest der Datenspeicher in dem Gehäuse integriert sein.

Ferner kann gemäß einer weiteren Ausführungsform der Zähleradapter eine integrierte Energieversorgung aufweisen, insbesondere in Form einer Batterie. Der Zähleradapter kann also batteriegestützt sein. Ein Energieversorgungsanschluss kann entfallen.

Ein weiterer Aspekt der Anmeldung ist ein System. Das System umfasst mindestens einen Zähler mit einem Impulsausgang. Das System umfasst mindestens einen zuvor beschriebenen Zähleradapter. Im bestimmungsgemäßen Betrieb ist der Impulsausgang des Zählers mit dem Impulseingang des Zähleradapters über eine drahtgebundene Verbindung verbunden.

Der Zähler ist insbesondere ein konventioneller Zähler (z.B. Balgenzähler) mit einem Impulsausgang (z.B. zur Ausgabe von 0/1-Signalen). Ein Zähler kann an einem Versorgungsmediumkanal (z.B. Rohr, Kabel etc.) angeordnet sein, um die über den Versorgungsmediumkanal übertragene Versorgungsmediummenge zu erfassen. Das Versorgungsmedium kann insbesondere ein fluides Medium sein, aber auch eine elektrische Leistung (bzw. Strommenge bzw. elektrische Energie). Beispielhafte und nicht abschließende Zähler sind Wasserzähler, Gaszähler, Elektrizitätszähler bzw. Stromzähler und Wärmemengenzähler. Wie bereits beschrieben wurde, kann im bestimmungsgemäßen Betrieb der Impulsausgang des Zählers mit dem Impulseingang des Zähleradapters über eine drahtgebundene Verbindung verbunden sein.

Durch die Nutzung des Zähleradapters kann ein notwendiger Zählerwechsel (für eine Anbindung des Zählers an ein SMG) entfallen. Der Bestandszähler (BGZ) kann weiter genutzt werden. Der BGZ kann trotz elektronischem Zähleradapter mit Hilfe des Stichprobenverfahrens über 20 Jahre Lebensdauer erreichen, wogegen elektronische Gaszähler mit integrierter Funkeinheit aufgrund der Eichfrist alle fünf Jahre gewechselt werden müssen.

Der anmeldungsgemäße Zähleradapter kann insbesondere für alle impulsgebenden Zähler, wie Wasserzähler, Wärmemengenzähler, sogar konventionelle Stromzähler, elektronische Gasmengenumwerter, Großgaszähler (Drehkolben-, Turbinenradgaszähler etc.) etc. verwendet werden.

Ein noch weiterer Aspekt der Anmeldung ist ein Verfahren nach Anspruch 10.

Wie bereits beschrieben wurde, meint Konvertieren insbesondere ein Fortschreiben. Insbesondere wird der über die beschriebene Parametrierung eingestellte Initialzählerstand anhand der registrierten Impulse (mit der konfigurierten Impulswertigkeit) in dem Zähleradapter fortgeschrieben.

Ein noch weiterer Aspekt ist ein Computerprogramm mit Instruktion, ausführbar durch einen Prozessor eines Zähleradapters, insbesondere eines zuvor beschriebenen Zähleradapters, zum Betreiben des Zähleradapters gemäß dem zuvor beschriebenen Verfahrens.

Das Computerprogramm, insbesondere die Instruktionen bzw. Programmanweisungen, können in einem Computerprogrammprodukt gespeichert sein, insbesondere einem Programmspeicher (des Zähleradapters). Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein Zähleradapter einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des Zähleradapters kann beispielsweise Zwischenergebnisse oder ähnliches in dem Hauptspeicher speichern. Es sei angemerkt, dass eine Einrichtung, wie eine Übersetzungseinrichtung, zumindest teilweise aus Hardware und/oder zumindest teilweise aus Software gebildet sein kann.

Es gibt nun eine Vielzahl von Möglichkeiten, den anmeldungsgemäße Zähleradapter, das anmeldungsgemäße Verfahren, das anmeldungsgemäße System und das anmeldungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Zähleradapters, dass nicht unter den Anspruchsgegenstand fällt.
- Fig. 2: eine schematische Ansicht eines weiteren Ausführungsbeispiels eines Zähleradapters gemäß der vorliegenden Erfindung.
- Fig. 3: eine schematische Ansicht eines Ausführungsbeispiels eines Systems gemäß der vorliegenden Anmeldung, und
- Fig. 4: ein Diagramm eines Ausführungsbeispiels eines Verfahrens gemäß der vorliegenden Anmeldung.

Gleiche Bezugszeichen werden für gleiche Elemente verwendet.

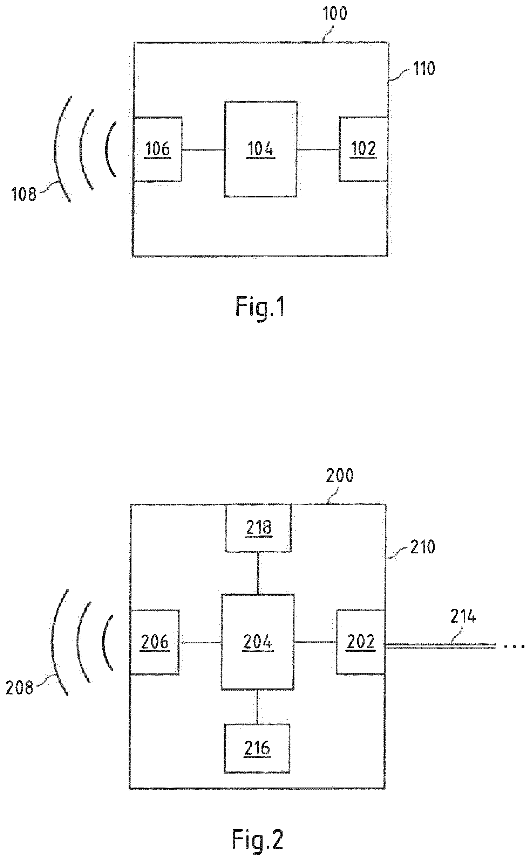

Die Figur 1 zeigt eine schematische Ansicht eines Ausführungsbeispiels eines Zähleradapters 100, dass nicht unter den Anspruchsgegenstand fällt. Der Zähleradapter 100 ist zur Verwendung mit einem herkömmlicher Zähler (z.B. BGZ) eingerichtet. Insbesondere kann der Zähleradapter 100 kommunikativ mit einem Zähler, wie einem Wasserzähler, Gaszähler, Elektrizitätszähler bzw. Stromzähler und/oder Wärmemengenzähler verbunden werden.

Der dargestellte Zähleradapter 100 weist ein (kompaktes) Gehäuse 110 auf, insbesondere aus einem Kunststoffmaterial. Insbesondere kann der gesamte Zähleradapter 100 BSI-konform sein.

Ferner weist der Zähleradapter 100 einen Impulseingang 102 auf. Bei anderen Varianten der Anmeldung kann ein Zähleradapter auch zwei oder mehr Impulseingänge aufweisen.

Der Impulseingang 102 ermöglicht einen Anschluss des Zähleradapters 100 an einen Impulsausgang eines Zählers. Anders ausgedrückt ist der mindestens eine Impulseingang 102 eingerichtet zum Anschließen des Zähleradapters 100 an den Impulsausgang eines Zählers. Der Impulseingang 102 ist insbesondere eine Hardware-Schnittstelle 102, die insbesondere zum Empfangen von Impulsen eingerichtet ist, wie zuvor beschrieben wurde. Anders ausgedrückt kann ein (augenblicklicher) Zählerstand des angeschlossenen Zählers durch den Empfang von Impulsen (insbesondere einer entsprechenden Anzahl von Impulsen) über den Impulseingang 102 erhalten werden.

Darüber hinaus weist der Zähleradapter 100 eine Übersetzungseinrichtung 104 auf, die insbesondere in dem Gehäuse 110 (manipulationssicher) integriert ist. Die durch den Impulseingang 102 erhaltenen Impulszählerdaten (z.B. umfassend einen Zählerstand) werden der Übersetzungseinrichtung 104 zur weiteren Verarbeitung bereitgestellt.

Die Übersetzungseinrichtung 104 ist eingerichtet zum Konvertieren, insbesondere Fortschreiben, der über den Impulseingang 102 von dem Zähler erhaltenen Impulszählerdaten in einen Zählerdatensatz, der Datenformat gemäß einem Standardprotoll eines Smart Meter Gateways aufweist. Der Zählerdatensatz, der insbesondere zumindest den Zählerstand des angeschlossenen Zählers enthalten kann, kann einem Datensatzausgang 106 bereitgestellt werden. Es versteht sich, dass zwei oder mehr Datensatzausgänge vorgesehen sein können.

Der Datensatzausgang 106 ist eingerichtet zum Senden des konvertierten, insbesondere fortgeschriebenen, Zählerdatensatzes an ein entfernt von dem Zähleradapter 100 angeordnetes Smart Meter Gateway. Vorzugsweise kann der Datensatzausgang 106 ein drahtloser Datensatzausgang 106 sein, eingerichtet zum Senden des konvertierten Zählerdatensatzes über eine drahtlose Verbindung 108 an das entfernt von dem Zähleradapter 100 angeordnete Smart Meter Gateway, insbesondere gemäß der Norm EN 13757-4.

Insbesondere ist der mindestens eine Datensatzausgang 106 eingerichtet, eine OMS (z.B. MOD 7) konforme Funkanbindung an ein Smart Meter Gateway zu ermöglichen bzw. herzustellen.

Die Figur 2 zeigt eine schematische Ansicht eines Ausführungsbeispiels eines Zähleradapters 200 gemäß der vorliegenden Erfindung. Zur Vermeidung von Wiederholungen werden nachfolgend im Wesentlichen nur die Unterschiede zu dem vorherigen Ausführungsbeispiel nach Figur 1 erläutert und ansonsten auf die obigen Angaben verwiesen.

Der dargestellte Zähleradapter 200 weist neben einem Datensatzausgang 206, einer Übersetzungseinrichtung 204 und einem Impulseingang 202 einen Datenspeicher 216 und eine Leseeinrichtung 218 auf.

Der Impulseingang 202 ist vorliegend ein drahtgebundener Impulseingang 202, eingerichtet zum Herstellen einer drahtgebundenen Verbindung 214, insbesondere ein Verbindungskabel 214 bzw. eine elektrische Leitung 214, zwischen dem Impulseingang 202 des Zähleradapters 20 und dem Impulsausgang des Zählers. Insbesondere kann ein Kabel 214 mit einer Länge zwischen 0,1 m und 10 m, insbesondere zwischen 0,1 m und 3 m; zwischen dem Impulsausgang des Zählers und dem drahtgebundenen Impulseingang 202 anschließbar sein. Eine besonders sichere, insbesondere BSI-konforme, Kommunikationsverbindung kann zwischen einem Zähler und dem Zähleradapter 200 hergestellt werden.

In dem Datenspeicher 216 ist mindestens eine von der Übersetzungseinrichtung 204 anwendbare Übersetzungsregel gespeichert**,** vorzugsweise ein Vielzahl von auswählbaren Übersetzungsregeln einer entsprechenden Vielzahl von unterschiedlichen Zählertypen. Besonders bevorzugt kann vorab, also insbesondere werkseitig, für nahezu alle gängigen Gaszähler, Wasserzähler, Elektrizitätszähler und/oder Wärmemengenzähler pro Zählertyp mindestens eine Übersetzungsregel gespeichert sein.

Insbesondere ist in dem Datenspeicher 216 jeder Übersetzungsregel eindeutig mit einer Kennung, insbesondere eine Zählertypkennung (z.B. in Form einer Seriennummer oder eine andere eindeutige Bezeichnung) assoziiert**.** Bei der Installation des Zähleradapters 200, also bei einem Anschließen des Zähleradapters 200 an den Zähler, kann die Übersetzungsregel ausgewählt, insbesondere aktiviert werden, die mit dem Zählertyp des anzuschließenden Zählers assoziiert ist.

Basierend auf der ausgewählten Übersetzungsregel (in der insbesondere die Impulswertigkeit des jeweiligen Zählertyps und die Umsetzung eines Zählerstands in ein Datenformat, welches Smart Meter Gateway -konform ist, abgebildet ist) kann die mindestens eine Übersetzungseinrichtung 204 die über den Impulseingang 202 von dem Zähler erhaltenen Impulszählerdaten in den genannten Zählerdatensatz umwandeln.

Um die Auswahl der korrekten Übersetzungsregel zu vereinfachen, verfügt der Zähleradapter 200 über eine Leseeinrichtung 218, beispielsweise einen optischen Scanner 218 (mit einem Bildauswertemodul). Mit dem Scanner 218 kann beispielsweise ein Codierungsmodul (z.B. ein Strichcode, QR-Code etc.), welches die Kennung, insbesondere die zuvor beschriebene Zählertypkennung, enthält, ausgelesen werden. Das Codierungsmodul kann an, in, benachbart zu dem angeschlossenen Zähler oder in einem Benutzerhandbuch (oder dergleichen) des Zählers angeordnet sein. Bei anderen Varianten der Anmeldung kann auch eine andere Technologie, wie NFC oder RFID, alternativ oder zusätzlich eingesetzt werden.

Basierend auf der ausgelesenen Kennung kann die Übersetzungseinrichtung 204 auf die dieser Kennung zugeordnete und in dem Datenspeicher 216 gespeicherte Übersetzungsregel zugreifen und diese für die Übersetzung der erhaltenen Impulszählerdaten in einen Zählerdatensatz mit einem Datenformat gemäß einem Standardprotoll eines Smart Meter Gateways anwenden.

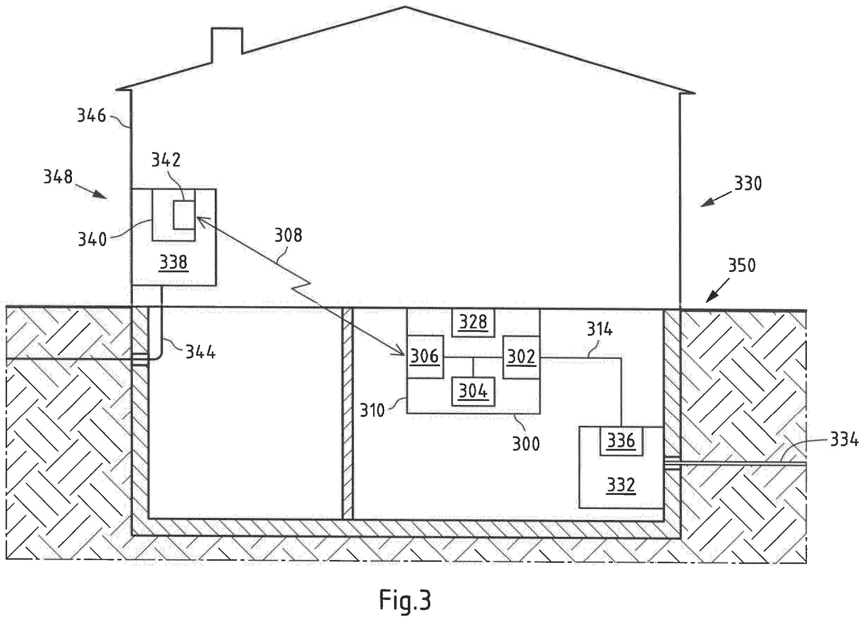

Die Figur 3 zeigt eine schematische Ansicht eines Ausführungsbeispiels eines Systems 330 gemäß der vorliegenden Anmeldung mit mindestens einem Zähler 332, vorliegend beispielhaft ein Gaszähler 332 (z.B. BGZ), und mindestens einem Zähleradapter 300. Zur Vermeidung von Wiederholungen wird insbesondere hinsichtlich des Zähleradapters 300 im Wesentlichen auf die Ausführungen zu den Ausführungsbeispielen nach Figur 1 oder 2 verwiesen.

Der dargestellte Zähleradapter 300 weist optional mindestens ein Befestigungsmodul (z.B. Schraubmodul, Schelle etc.) auf, eingerichtet zum Befestigen des Zähleradapters, beispielsweise an einer Wand oder, wie dargestellt, einer Decke eines Gebäudes 346. Wie zu erkennen ist, ist das System 330 vorliegend in einem Gebäude 346 angeordnet. Vorliegend ist der Gaszähler 332 in einem Kellerbereich 350 des Gebäudes 346 angeordnet. Der Gaszähler 332 kann im Bereich des Gasanschlusses des Gebäudes 346 implementiert sein, um insbesondere die von einem Gasversorgungsnetz 334 bezogene Gasmenge zu erfassen.

Darüber hinaus ist ein Elektrizitätszähler 338 bzw. Stromzähler 338 in einem Erdgeschossbereich 348 des Gebäudes 346 angeordnet. Der Elektrizitätszähler 338 kann im Bereich des Elektrizitätsanschlusses des Gebäudes 346 implementiert sein, um insbesondere die von einem elektrischen Versorgungs- bzw. Verteilnetz 334 bezogene elektrische Energie zu erfassen.

Der Elektrizitätszähler 338 weist im vorliegenden Ausführungsbeispiel ein herkömmliches Smart Meter Gateway 340 auf, welches über ein drahtloses Kommunikationsmodul 342 verfügt.

Ferner ist zu erkennen, dass im bestimmungsgemäßen Betrieb des Systems 330 der Impulseingang 302 des Zähleradapters 300 über ein Kabel (oder dergleichen) 314 mit dem Impulsausgang 336 des Gaszählers 332 verbunden ist. Über die drahtlose Verbindung 308, insbesondere eine OMS (z.B. MOD 7) konforme Funkverbindung 308, kann ein konvertierter Zählerdatensatz an das entfernt von dem Zähleradapter 300 angeordnetes Smart Meter Gateway 340 übermittelt werden. Insbesondere kann es sein, dass aufgrund baulicher Gegebenheiten bei einer angenommenen Anordnung des Zähleradapters 300 unmittelbar neben dem Gaszähler keine Kommunikationsverbindung zwischen dem Zähleradapter 300 und dem Smart Meter Gateway 340 herstellbar wäre. Vorliegend kann der Zähleradapter 300 aufgrund des Kabels 314 derart angeordnet werden, dass eine (sichere) Kommunikationsverbindung 308 zwischen dem Zähleradapter 300 und dem Smart Meter Gateway 340 herstellbar ist, indem der Zähleradapter 300 derart positioniert sind, dass eine Verbindung 308 herstellbar ist.

In einfacher Weise, insbesondere ohne einen Austausch eines herkömmlichen Zählers und unter Nutzung eines ohnehin bereits implementierten Smart Meter Gateway können Zählerdaten übertragen werden.

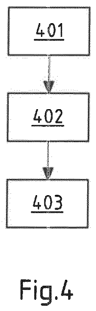

Die Figur 4 zeigt ein Diagramm eines Ausführungsbeispiels eines Verfahrens gemäß der vorliegenden Anmeldung. Insbesondere ist ein Verfahren zum Betreiben eines (zuvor beispielhaft beschriebenen) Zähleradapters dargestellt.

In einem ersten optionalen Schritt 401 kann ein Zähleradapter installiert werden. Dies kann insbesondere das Anschließen des Zähleradapters, insbesondere des Impulseingangs des Zähleradapters, an einen Zähler, insbesondere einen Impulsausgang des Zählers, umfassen. Zudem kann bei der Installation eine von der Übersetzungseinrichtung anzuwendende Übersetzungsregel ausgewählt und insbesondere aktiviert werden, wie zuvor beispielhaft beschrieben wurde.

In einem weiteren Schritt 402 werden die über einen Impulseingang des Zähleradapters von einem an den Impulseingang angeschlossenen Impulsausgang eines Zählers erhaltenen Impulszählerdaten in einen Zählerdatensatz mit einem Datenformat gemäß einem Standardprotoll eines Smart Meter Gateways konvertiert, wie insbesondere zuvor beschrieben wurde.

In einem nächsten Schritt 403 wird ein Senden des konvertierten Zählerdatensatzes an ein entfernt von dem Zähleradapter angeordnetes Smart Meter Gateway bewirkt, wie insbesondere zuvor beschrieben wurde.

## Patentansprüche

1. Zähleradapter (100, 200, 300) für einen Zähler (332) mit einem Impulsausgang (336), umfassend:
- mindestens einen Impulseingang (102, 202, 302), eingerichtet zum Anschließen des Zähleradapters (100, 200, 300) an den Impulsausgang (336) des Zählers (332),
- mindestens eine Übersetzungseinrichtung (104, 204, 304), eingerichtet zum Konvertieren der über den Impulseingang (102, 202, 302) von dem Zähler (332) erhaltenen Impulszählerdaten in einen Zählerdatensatz in einem Datenformat gemäß einem Standardprotoll eines Smart Meter Gateways (340), und
- mindestens einen Datensatzausgang (106, 206, 306), eingerichtet zum Senden des konvertierten Zählerdatensatzes an ein entfernt von dem Zähleradapter (100, 200, 300) angeordnetes Smart Meter Gateway (340), wobei
- der Zähleradapter (100, 200, 300) mindestens einen Datenspeicher (216) umfasst, eingerichtet zum Speichern mindestens einer zählertyp-basierten Übersetzungsregel,
- wobei die Übersetzungseinrichtung (104, 204, 304) eingerichtet ist zum Konvertieren der über den Impulseingang (102, 202, 302) von dem Zähler (332) erhaltenen Impulszählerdaten in den Zählerdatensatz, basierend auf der mindestens einen Übersetzungsregel,
- wobei in dem Datenspeicher (216) eine Mehrzahl von auswählbaren zählertyp-basierten Übersetzungsregeln für eine entsprechende Mehrzahl von unterschiedlichen Zählertypen gespeichert ist,
- wobei die von der Übersetzungseinrichtung (104, 204, 304) anwendbare zählertyp-basierte Übersetzungsregel auswählbar ist in Abhängigkeit des Zählertyps des anzuschließenden Zählers (332),
- wobei die Übersetzungseinrichtung (104, 204, 304) eingerichtet ist zum Konvertieren der über den Impulseingang (102, 202, 302) von dem Zähler (332) erhaltenen Impulszählerdaten in den Zählerdatensatz, basierend auf der ausgewählten Übersetzungsregel,
- **dadurch gekennzeichnet, dass** der Zähleradapter mindestens eine Leseeinrichtung (218) umfasst, eingerichtet zum Erfassen einer dem anzuschließenden Zähler (332) zugeordnete Zählerkennung, und
- wobei die mindestens eine Übersetzungseinrichtung (104, 204, 304) eingerichtet ist zum Auswählen der Übersetzungsregel abhängig von der erfassten Zählerkennung.

2. Zähleradapter (100, 200, 300) nach Anspruch 1, **dadurch gekennzeichnet, dass**
- der mindestens eine Impulseingang (102, 202, 302) ein drahtgebundener Impulseingang (102, 202, 302) ist, eingerichtet zum Herstellen einer drahtgebundenen Verbindung (214, 314) zwischen dem Impulseingang (102, 202, 302) des Zähleradapters (100, 200, 300) und dem Impulsausgang (336) des Zählers (332).

3. Zähleradapter (100, 200, 300) nach Anspruch 1 oder 2, **dadurch gekennzeichnet, dass**
- der mindestens eine Datensatzausgang (106, 206, 306) ein drahtloser Datensatzausgang (106, 206, 306) ist, eingerichtet zum Senden des konvertierten Zählerdatensatzes über eine drahtlose Verbindung (108, 208, 308) an das entfernt von dem Zähleradapter (100, 200, 300) angeordnete Smart Meter Gateway (340), insbesondere gemäß der Norm EN 13757-4.

4. Zähleradapter (100, 200, 300) nach einem der einem der vorherigen Ansprüche, **dadurch gekennzeichnet, dass**
- die Übersetzungseinrichtung (104, 204, 304) eingerichtet ist zum Bestimmen des augenblicklichen Zählerstand des anschließbaren Zählers (332) aus den erhaltenen Impulszählerdaten,
- wobei die mindestens eine Übersetzungseinrichtung (104, 204, 304) eingerichtet ist zum Konvertieren des bestimmten Zählerstands, derart, dass der konvertierte Zählerdatensatz den bestimmten Zählerstand enthält.

5. Zähleradapter (100, 200, 300) nach einem der vorherigen Ansprüche, **dadurch gekennzeichnet, dass**
- die mindestens eine Leseeinrichtung ein optischer Scanner, ein RFID-basierter Leser und/oder ein NFC-basierter Leser ist.

6. Zähleradapter (100, 200, 300) nach einem der vorherigen Ansprüche, **dadurch gekennzeichnet, dass**
- wobei eine Zuordnung zwischen dem Zähler und der Kennung vorliegt, wenn die Kennung in Form eines lesbaren Codierungsmoduls in oder an oder zumindest benachbart zu dem Zähler angeordnet ist,
- wobei das Codierungsmodul ein Strichcode, QR-Code, RFID- oder NFC-Tag ist.

7. Zähleradapter (100, 200, 300) nach einem der vorherigen Ansprüche 1 bis 6, **dadurch gekennzeichnet, dass**
- eine Zuordnung zwischen dem Zähler und der Kennung vorliegt, wenn die Kennung in Form eines Codierungsmodul in einer Betriebsanleitung des Zählers angeordnet ist,
- wobei das Codierungsmodul ein Strichcode oder QR-Code ist.

8. Zähleradapter (100, 200, 300) nach einem der vorherigen Ansprüche, **dadurch gekennzeichnet, dass**
- zumindest die Übersetzungseinrichtung (104, 204, 304) in einem Gehäuse (110, 210, 310) des Zähleradapters (100, 200, 300) integriert ist.

9. System (330), umfassend:
- mindestens einen Zähler (332) mit einem Impulsausgang (336), und
- mindestens einen Zähleradapter (100, 200, 300) nach einem der vorherigen Ansprüche 1 bis 8,
- wobei im bestimmungsgemäßen Betrieb der Impulsausgang (336) des Zählers (332) mit dem Impulseingang (102, 202, 302) des Zähleradapters (100, 200, 300) über eine drahtgebundene Verbindung (214, 314) verbunden ist.

10. Verfahren zum Betreiben eines Zähleradapters (100, 200, 300), nach einem der vorherigen Ansprüche 1 bis 8, umfassend:
- Konvertieren der über einen Impulseingang (102, 202, 302) des Zähleradapters (100, 200, 300) von einem an den Impulseingang (102, 202, 302) angeschlossenen Impulsausgang (336) eines Zählers (332) erhaltenen Impulszählerdaten in einen Zählerdatensatz in einem Datenformat gemäß einem Standardprotoll eines Smart Meter Gateways (340), und
- Bewirken eines Sendens des konvertierten Zählerdatensatzes an ein entfernt von dem Zähleradapter (100, 200, 300) angeordnetes Smart Meter Gateway (340),
- Speichern mindestens einer zählertyp-basierten Übersetzungsregel in einem Datenspeicher (216) des Zähleradapters (100, 200, 300),
- wobei in dem Datenspeicher (216) eine Mehrzahl von auswählbaren zählertyp-basierten Übersetzungsregeln für eine entsprechende Mehrzahl von unterschiedlichen Zählertypen gespeichert ist,
- Auswählen der von der Übersetzungseinrichtung (104, 204, 304) anzuwendenden zählertyp-basierten Übersetzungsregel in Abhängigkeit des Zählertyps des anzuschließenden Zählers (332), und
- Konvertieren, durch die Übersetzungseinrichtung (104, 204, 304), der über den Impulseingang (102, 202, 302) von dem Zähler (332) erhaltenen Impulszählerdaten in den Zählerdatensatz, basierend auf der ausgewählten Übersetzungsregel,
- Erfassen, durch mindestens eine Leseeinrichtung (218), einer dem anzuschließenden Zähler (332) zugeordnete Zählerkennung, und
- Auswählen, durch die mindestens eine Übersetzungseinrichtung (104, 204, 304), der Übersetzungsregel abhängig von der erfassten Zählerkennung.

11. Computerprogramm mit Instruktion, ausführbar durch einen Prozessor eines Zähleradapters (100, 200, 300), nach einem der Ansprüche 1 bis 8, zum Betreiben des Zähleradapters (100, 200, 300) gemäß dem Verfahren nach Anspruch 10.

## Claims

1. A meter adapter (100, 200, 300) for a meter (332) having a pulse output (336), comprising:
- at least one pulse input (102, 202, 302) configured to connect the meter adapter (100, 200, 300) to the pulse output (336) of the meter (332),
- at least one translation equipment (104, 204, 304) configured to convert the pulse meter data received from the meter (332) via the pulse input (102, 202, 302) into a meter data set in a data format according to a standard protocol of a smart meter gateway (340), and
- at least one data set output (106, 206, 306) configured to send the converted meter data set to a smart meter gateway (340) located remotely from the meter adapter (100, 200, 300),
wherein
- the meter adapter (100, 200, 300) comprises at least one data memory (216) configured to store at least one meter type-based translation rule,
- wherein the translation equipment (104, 204, 304) is configured to convert the pulse meter data received from the meter (332) via the pulse input (102, 202, 302) into the meter data record based on the at least one translation rule,
- wherein a plurality of selectable meter type-based translation rules for a corresponding plurality of different meter types are stored in the data storage (216),
- wherein the applicable meter type-based translation rule from the translation equipment (104, 204, 304) is selectable depending on the meter type of the meter (332) to be connected,
- wherein the translation equipment (104, 204, 304) is configured to convert the pulse meter data received from the meter (332) via the pulse input (102, 202, 302) into the meter data set based on the selected translation rule,
- **characterized in that** the meter adapter comprises at least one reading device (218) configured to detect a meter identifier associated with the meter (332) to be connected, and
- wherein the at least one translation equipment (104, 204, 304) is configured to select the translation rule depending on the detected meter identifier.

2. The meter adapter (100, 200, 300) according to claim 1, **characterized in that**
- the at least one pulse input (102, 202, 302) is a wired pulse input (102, 202, 302) configured to establish a wired connection (214, 314) between the pulse input (102, 202, 302) of the meter adapter (100, 200, 300) and the pulse output (336) of the meter (332).

3. The meter adapter (100, 200, 300) according to claim 1 or 2, **characterized in that**
- the at least one data set output (106, 206, 306) is a wireless data set output (106, 206, 306) configured to transmit the converted meter data set via a wireless connection (108, 208, 308) to the smart meter gateway (340) located remotely from the meter adapter (100, 200, 300), in particular, in accordance with the EN 13757-4 standard.

4. The meter adapter (100, 200, 300) according to one of the previous claims, **characterized in that**
- the translation equipment (104, 204, 304) is configured to determine the current meter reading of the connectable meter (332) from the received pulse meter data,
- wherein the at least one translation equipment (104, 204, 304) is configured to convert the determined meter reading such that the converted meter data set contains the determined meter reading.

5. The meter adapter (100, 200, 300) according to any of the preceding claims, **characterized in that**
- the at least one reading device is an optical scanner, an RFID-based reader, and/or an NFC-based reader.

6. The meter adapter (100, 200, 300) according to one of the previous claims, **characterized in that**
- an assignment between the meter and the identifier exists if the identifier is arranged in the form of a readable coding module in or at or at least adjacent to the meter,
- wherein the coding module is a barcode, QR code, RFID tag or NFC tag.

7. The meter adapter (100, 200, 300) according to any of the previous claims 1 to 6, **characterized in that**
- an assignment between the meter and the identifier exits if the identifier is arranged in the form of a coding module in an operating manual for the meter,
- wherein the coding module is a barcode or QR code.

8. The meter adapter (100, 200, 300) according to one of the previous claims, **characterized in that**
- at least the translation equipment (104, 204, 304) is integrated in a housing (110, 210, 310) of the meter adapter (100, 200, 300).

9. A system (330) comprising:
- at least one meter (332) with a pulse output (336), and
- at least one meter adapter (100, 200, 300) according to one of the preceding claims 1 to 8,
- wherein, in intended operation, the pulse output (336) of the meter (332) is connected to the pulse input (102, 202, 302) of the meter adapter (100, 200, 300) via a wired connection (214, 314).

10. A method for operating a meter adapter (100, 200, 300) according to any of the preceding claims 1 to 8, comprising:
- converting pulse meter data obtained from a pulse output (336) of a meter (332) connected to a pulse input (102, 202, 302) of the meter adapter (100, 200, 300) via a pulse input (102, 202, 302) of the meter adapter (100, 200, 300) into a meter data set in a data format according to a standard protocol of a smart meter gateway (340), and
- causing a transmitting of the converted meter data set to a smart meter gateway (340) located remotely from the meter adapter (100, 200, 300),
- storing at least one meter type-based translation rule in a data memory (216) of the meter adapter (100, 200, 300),
- wherein a plurality of selectable meter type-based translation rules for a corresponding plurality of different meter types are stored in the data storage (216),
- selecting the meter type-based translation rule to be applied by the translation equipment (104, 204, 304) depending on the meter type of the meter (332) to be connected, and
- converting, by the translation equipment (104, 204, 304), the pulse meter data received from the meter (332) via the pulse input (102, 202, 302) into the meter data set based on the selected translation rule,
- detecting, by at least one reading device (218), a meter identification assigned to the meter (332) to be connected, and
- selecting, by the at least one translation equipment (104, 204, 304), the translation rule depending on the detected meter identification.

11. A computer program with instructions, executable by a processor of a meter adapter (100, 200, 300) according to one of claims 1 to 8 for operating the meter adapter (100, 200, 300) according to the method according to claim 10.

## Revendications

1. Adaptateur de compteur (100, 200, 300) pour un compteur (332) avec une sortie d'impulsion (336), comprenant :
- au moins une entrée d'impulsions (102, 202, 302) configuré pour connecter l'adaptateur de compteur (100, 200, 300) à la sortie d'impulsions (336) du compteur (332),
- au moins un dispositif de conversion (104, 204, 304) configuré pour convertir les données de compteur d'impulsions reçues du compteur (332) via l'entrée d'impulsions (102, 202, 302) en un ensemble de données de compteur dans un format de données conforme à un protocole standard d'une passerelle de compteur intelligent (340), et
- au moins une sortie d'ensemble de données (106, 206, 306) configuré pour envoyer l'ensemble de données de compteur converti à une passerelle de compteur intelligent (340) située à distance de l'adaptateur de compteur (100, 200, 300),
où
- l'adaptateur de compteur (100, 200, 300) comprend au moins une mémoire de données (216) configuré pour stocker au moins une règle de conversion basée sur type de compteur,
- où le dispositif de conversion (104, 204, 304) est configuré pour convertir les données de compteur d'impulsions reçues du compteur (332) via l'entrée d'impulsions (102, 202, 302) en un ensemble de données de compteur sur la base de la au moins une règle de conversion,
- où une pluralité de règles de conversion basées sur type de compteur sélectionnables pour une pluralité correspondante de types de compteurs différents sont stockées dans la mémoire de données (216),
- où la règle de conversion basée sur type de compteur applicable par le dispositif de conversion (104, 204, 304) est sélectionnable en fonction du type de compteur du compteur (332) à connecter,
- où le dispositif de conversion (104, 204, 304) est configuré pour convertir les données de comptage d'impulsions reçues du compteur (332) via l'entrée d'impulsions (102, 202, 302) en l'ensemble de données de comptage, sur la base de la règle de conversion sélectionnée,
- **caractérisé en ce que** l'adaptateur de compteur comprend au moins un dispositif de lecture (218) configuré pour détecter un identifiant de compteur associé au compteur à connecter (332), et
- où le au moins un dispositif de conversion (104, 204, 304) est configuré pour sélectionner la règle de conversion en fonction de l'identifiant de compteur détecté.

2. Adaptateur de compteur (100, 200, 300) selon la revendication 1, **caractérisé en ce que**
- la au moins une entrée d'impulsion (102, 202, 302) est une entrée d'impulsion câblée (102, 202, 302) configurée pour établir une connexion câblée (214, 314) entre l'entrée d'impulsion (102, 202, 302) de l'adaptateur de compteur (100, 200, 300) et la sortie d'impulsions (336) du compteur (332).

3. Adaptateur de compteur (100, 200, 300) selon la revendication 1 ou 2, **caractérisé en ce que**
- la au moins une sortie d'ensemble de données (106, 206, 306) est une sortie d'ensemble de données sans fil (106, 206, 306) configurée pour envoyer l'ensemble de données de compteur converti via une connexion sans fil (108, 208, 308) vers la passerelle de compteur intelligent (340) située à distance de l'adaptateur de compteur (100, 200, 300), en particulier conformément à la norme EN 13757-4.

4. Adaptateur de compteur (100, 200, 300) selon l'une des revendications précédentes, **caractérisé en ce que**
- le dispositif de conversion (104, 204, 304) est configuré pour déterminer l'état actuel du compteur connectable (332) à partir des données de compteur d'impulsions reçues,
- où le au moins un dispositif de conversion (104, 204, 304) est conçu pour convertir la valeur de compteur déterminée de telle sorte que l'ensemble de données de compteur converti contienne la valeur de compteur déterminée.

5. Adaptateur de compteur (100, 200, 300) selon l'une des revendications précédentes, **caractérisé en ce que**
- le au moins un dispositif de lecture est un scanner optique, un lecteur RFID et/ou un lecteur NFC.

6. Adaptateur de compteur (100, 200, 300) selon l'une des revendications précédentes, **caractérisé en ce que**
- où il existe une association entre le compteur et l'identifiant lorsque l'identifiant est disposé sous la forme d'un module de codage lisible dans ou sur le compteur, ou au moins à proximité de celui-ci,
- où le module de codage est un code-barres, un code QR, une étiquette RFID ou NFC.

7. Adaptateur de compteur (100, 200, 300) selon l'une des revendications 1 à 6 précédentes, **caractérisé en ce que**
- il existe une association entre le compteur et l'identifiant lorsque l'identifiant est disposé sous la forme d'un module de codage dans un mode d'emploi du compteur,
- où le module de codage est un code-barres ou un code QR.

8. Adaptateur de compteur (100, 200, 300) selon l'une des revendications précédentes, **caractérisé en ce que**
- au moins le dispositif de conversion (104, 204, 304) est intégré dans un boîtier (110, 210, 310) de l'adaptateur de compteur (100, 200, 300).

9. Système (330) comprenant :
- au moins un compteur (332) avec une sortie d'impulsions (336), et
- au moins un adaptateur de compteur (100, 200, 300) selon l'une des revendications 1 à 8 précédentes,
- où, en fonctionnement normal, la sortie d'impulsions (336) du compteur (332) est reliée à l'entrée d'impulsions (102, 202, 302) de l'adaptateur de compteur (100, 200, 300) par une connexion à fil (214, 314).

10. Méthode pour faire fonctionner un adaptateur de compteur (100, 200, 300) selon l'une des revendications 1 à 8 précédentes, comprenant :
- convertir des données de compteur d'impulsions obtenues à partir d'une sortie d'impulsions (336) d'un compteur (332) connectée à une entrée d'impulsions (102, 202, 302) de l'adaptateur de compteur (100, 200, 300) en un ensemble de données de comptage dans un format de données conforme à un protocole standard d'une passerelle de compteur intelligent (340), et
- provoquer un envoi de l'ensemble de données de compteur converti à une passerelle de compteur intelligent (340) située à distance de l'adaptateur de compteur (100, 200, 300),
- stocker au moins une règle de conversion basée sur type de compteur dans une mémoire de données (216) de l'adaptateur de compteur (100, 200, 300),
- où la mémoire de données (216) contient une pluralité de règles de conversion sélectionnables basées sur type de compteur pour une pluralité correspondante de types de compteurs différents,
- sélectionner la règle de conversion basée sur type de compteur à appliquer par le dispositif de conversion (104, 204, 304) en fonction du type de compteur du compteur à connecter (332), et
- convertir, par le dispositif de conversion (104, 204, 304), les données de compteur d'impulsions reçues du compteur (332) via l'entrée d'impulsions (102, 202, 302) en l'ensemble de données de compteur, sur la base de la règle de conversion sélectionnée,
- détecter, par au moins un dispositif de lecture (218), un identifiant de compteur associé au compteur à connecter (332), et
- sélectionner, par le ou les dispositifs de conversion (104, 204, 304), la règle de conversion en fonction de l'identifiant de compteur détecté.

11. Programme informatique avec instruction, exécutable par un processeur d'un adaptateur de compteur (100, 200, 300), selon l'une des revendications 1 à 8, pour faire fonctionner l'adaptateur de compteur (100, 200, 300) selon la méthode selon la revendication 10.
